# EUROPÄISCHE PATENTSCHRIFT

(11) **EP 2 666 346 B1**
(45) Veröffentlichungstag und Bekanntmachung des Hinweises auf die Patenterteilung: **11.05.2016**
(21) Anmeldenummer: 13002557.0
(22) Anmeldetag: 15.05.2013
(51) Int. Cl.: A01D 34/47, A01D 34/68, A01D 34/82, B60K 26/04

(54) **Motorgetriebenes Landschaftspflegegerät**
Motor-driven landscaping device
Appareil d'entretien paysager motorisé

(30) Priorität: 22.05.2012 DE 102012010007
(43) Veröffentlichungstag der Anmeldung: 27.11.2013
(73) Patentinhaber: Julius Tielbürger GmbH & Co. KG, D-32351 Stemwede-Oppenwehe (DE)
(72) Erfinder: Tielbürger, Jörg, 32351 Stemwede (DE)
(74) Vertreter: Pott, Ulrich

(56) Entgegenhaltungen:
- EP-A1- 0 242 443
- GB-A- 1 273 572
- GB-A- 1 397 187
- US-A1- 2009 191 992

## Beschreibung

Die Erfindung betrifft ein Landschaftspflegegerät mit einem motorischen Antrieb, der über eine manuelle Bedienung gemäß dem Oberbegriff des Anspruchs 1 steuerbar ist.

Motorgetriebene Landschaftspflegegeräte sind seit langem bekannt (DE 83 28 959.3 U1), wobei im Bereich eines Führungslenkers jeweilige Bedienelemente zur Bedienung einer Antriebssteuerung im Bereich des Motors bzw. eines zugeordneten Getriebes vorgesehen sind.

Bei einem Landschaftspflegegerät gemäß EP 1 068 787 A1 sind am Führungslenker jeweilige Bedienungselemente zur Einstellung der Geschwindigkeit eines Werkzeugantriebes und eines Fahrantriebs angeordnet. Damit sind stufenlose Verstellungen der Antriebe möglich, derart, dass eine für den Bereich der Landschaftspflegegeräte als Variatorantrieb bezeichnete Konstruktion nutzbar ist. Als Bedienungselemente sind dabei jeweilige Zughebel oder Drehgriffe vorgesehen, die während des Einsatzes des Landschaftspflegegerätes in entsprechenden Stellungen gehalten werden müssen. Es hat sich dabei als nachteilig gezeigt, dass die Handhaltung zum permanenten Beibehalten der eingestellten Fahrparameter nachteilige Bedienungsbedingungen bringt. Deshalb sind Bedienungselemente vorgesehen, die in verschiedenen Einstellpositionen arretierbare Einstellelemente aufweisen.

In EP 1 211 168 B1 ist eine spezielle Konstruktion eines Schaltgriffes am Führungslenker des Landschaftspflegegerätes vorgesehen, wobei zwei am Führungslenker vorgesehene Schaltgriffe mit einer jeweils einen Anschlag aufweisenden Feh Ibedienungssperre versehen sind. Durch diese Fehlbedienungssperre kann jeweils einer der beiden Schaltgriffe betätigt werden, so dass Fehlschaltungen vermieden und damit der Motor sowie das Getriebe vor Beschädigungen geschützt sind.

Bei einem ähnlichen System gemäß EP 0 242 443 weist der Führungslenker im Bereich eines Handgriffs einen als Notfunktion vorgesehenen Hebel auf, der einen bereits fest eingestellten Schalthebel des Getriebes entkoppeln kann. Derartige einfache Hand-Hebel zum Abstellen von Motoren o. dgl. sind auch in DE 14 55 572, CH 607 699, DE 26 22 476 und FR 2 311 678 gezeigt.

Gemäß US 2009/191992 A1 wird ein Rasenmäher vorgeschlagen, bei dem die als Radantrieb vorgesehene Antriebsachse als Drehachse verwendet wird. Damit kann eine Kippung des Getriebes ausgeführt werden und damit die Riemenspannung zwischen Motor und Riemenscheibe des Getriebes verändert werden. Dabei sind jeweilige als Handhebel ausgebildete Bedienelemente mit einem im Bereich des Getriebes vorgesehenen Steuerhebel verbunden, mit dem die Bedienfunktion des Mähers regelbar ist. Der getriebeseitige Steuerhebel ist dabei mit einem Vorwahlsteller und einem in Relation zu diesem eine übersteuernde Wirkung aufweisenden Handsteller verbunden.

Die Erfindung befasst sich mit dem Problem, ein motorgetriebenes Landschaftspflegegerät zu schaffen, dessen bei Anwendungsbeginn zu bedienende sowie nachfolgend variabel zur Antriebsregelung nutzbare Bedienelemente so kombiniert sind, dass insbesondere während eines professionellen Einsatzes derartiger Geräte mit kurzzeitigen Unterbrechungen eines monotonen Bearbeitungsvorganges eine Verbesserung des Bedienkomforts möglich ist.

Die Erfindung löst diese Aufgabe durch ein motorgetriebenes Landschaftspflegegerät mit den Merkmalen des Anspruchs 1. Weitere vorteilhafte Ausgestaltungen ergeben sich aus den Ansprüchen 2 bis 27.

Das motorgetriebene Landschaftspflegegerät weist eine handbedienbare Antriebssteuerung auf, bei der an einem getriebe- bzw. motorseitigen Steuerhebel erfindungsgemäß eine einen Vorwahlsteller und einen Handsteller kombinierende Funktionseinheit vorgesehen ist. Dabei sieht das Konzept dieser Einheit vor, dass innerhalb einer Zwei-Steller-Kombination ein jeweils als der Handsteller definiertes Teil in Relation zum jeweils als der Vorwahlsteller definierten zweiten Teil hin mit einer eine übersteuernde Wirkung aufweisenden Verbindungsstruktur versehen wird.

Ausgehend von einer so für den Gerätenutzer zur Handbedienung bereitgestellten Stell-Steuer-Anordnung greift am Steuerhebel der Motor-Getriebe-Einheit nur ein Bewegungsglied an, so dass mit den im Bereich der beiden Steller vorgewählten und von einer zwischen geordneten Steuervorrichtung umgesetzten Werkzeug- und/oder Fahrkomponenten an der Antriebssteuerung jeweils optimale Bedienabläufe wirksam werden.

Der Vorwahlsteller und der Handsteller sind dabei im Bereich der "zwischen liegenden" Steuervorrichtung so verbunden, dass mittels des Handstellers sowohl während der Bearbeitungsphasen auftretende Änderungen von Antriebsparametern auf den Steuerhebel übertragbar sind, als auch eine bereits in der Startphase oder während einer Unterbrechung der Bearbeitung als optimal gespeicherte Funktionsstellung - ohne nochmalige direkte Betätigung des Vorwahlstellers - unverändert wieder herstellbar ist. Damit wird ein Konzept realisiert, bei dem der Vorwahlsteller in eine eine optimale Funktionsstellung der Steuervorrichtung speichernde Warteposition verlagert und aus dieser "Warteposition" zu einem beliebigen Zeitpunkt diese Funktionsstellung wieder "abgerufen" werden kann.

Vorteilhaft ist dabei, dass am Steuerhebel nur das Bewegungsglied angreift und dieses mit dem als erstes Bedienelement vorgesehenen Vorwahlsteller und dem als zweites Bedienelement vorgesehenen Handsteller mittels einer Überbrückungseinheit als einfach ausführbare "Stellhilfe" der Steuervorrichtung zusammenwirkt. Damit wird erreicht, dass in einer ersten Bedienphase mittels des Vorwahlstellers im Bereich der Antriebssteuerung zumindest eine für die jeweilige Anwendung optimale Funktionsstellung auswählbar ist. Diese bleibt dann zumindest zeitweise unabhängig von einer zwischenzeitlichen zweiten Bedienphase des Handstellers erhalten. Danach ist die optimale Funktionslage - in einer dritten Bedienphase - einfach wieder herzustellen.

Dies führt dazu, dass am Gerät nach einer relativ langzeitigen, "monotonen" Bedienphase eine bereits vorher als optimal "vorgewählte" Bedienstellung beliebig oft wieder erreicht werden kann. Beim Erfordernis einer kurzzeitigen Unterbrechung eines laufenden Arbeitsvorgangs - beispielsweise während einer professionellen Reinigung eines langgestreckten Fußweges - kann mit geringem Bedienaufwand die "alte Position" so wieder hergestellt werden, dass auch für wenig geübte Nutzer derartiger Geräte eine optimale "Langzeitbearbeitung" mit kurzen Unterbrechungen möglich ist. Dies kann beispielsweise notwendig sein, wenn während eines Kehrvorganges jeweilige Weg-Abschnitte mit größerem Verschmutzungsumfang mit einem hier vorteilhafter auf "langsam" verstellten Bearbeitungsvorgang intensiver zu reinigen sind. Auch nach kurzzeitigen Stopps - beispielsweise in einer Gefahrensituation - kann das Landschaftspflegegerät mittels des Handstellers mit geringem Aufwand nach Gefahrenbeseitigung wieder in die voreingestellte optimale Arbeitsposition gebracht und der Bearbeitungsvorgang schnell und ohne nachteilige "Neueinstellungen" fortgesetzt werden.

Eine optimale konstruktive Ausführung dieses Bediensystems wird dadurch erreicht, dass der im Bereich des Führungslenkers gehaltene Handsteller mit Überbrückungseinheit und Vorwahlsteller eine variabel bedienbare Steuervorrichtung definieren, wobei diese im Bereich vor dem Steuerhebel des Antriebssystems nur mittels des einen Handstellers eine Vielzahl von Stell- und Steuerbewegungen ermöglicht. Dabei weist der Handsteller insbesondere mittels der einen Überbrückungseinheit die in Relation zum Vorwahlsteller übersteuernde Wirkung auf, so dass mit wenigen Bauteilen eine belastungsstabile Ausführung der Steuervorrichtung erreicht ist.

Diese die Überbrückungseinheit aufweisende Steuervorrichtung ist im Bereich des vorzugsweise jeweilige Grobeinstellungen realisierenden Handstellers nach Art einer Ein-Hand-Bedienung ausgeführt. Als konstruktive Variante kann auch vorgesehen sein, dass der Vorwahlsteller und der Handsteller unmittelbar nebeneinander im Bereich des Führungslenkers angeordnet sind und damit die Schnelligkeit der Bedienung weiter optimiert ist.

Damit wird erreicht, dass auch die Arbeitsparameter entsprechend schneller variiert werden können. Dabei ist denkbar, mittels Bedienung beider Steller gleichzeitig beide Parameter zu verändern.

Bei der in einer Startphase erfolgenden Bedienung des Geräte-Systems ist vorgesehen, dass im Bereich des Vorwahlstellers eine Voreinstellung von Arbeitsparametern erfolgt und danach nur noch mit dem am Steuerhebel angreifenden Bewegungsglied und dem Handsteller eine wahlweise Veränderung von voreingestellten Arbeitsparametern bzw. eine Fahrtrichtungsumkehr erfolgt. Die konstruktive Umsetzung dieses Steuerkonzeptes sieht vor, dass der Vorwahlsteller im Verbindungsbereich zur Überbrückungseinheit eine - in Bezug zum anderenends vorgesehenen Anlenkpunkt des Steuerhebels am Motor bzw. Getriebe - verlagerbare Verbindung bildet. Vorteilhaft ist dabei der Vorwahlsteller mit einer schubbeweglichen Stützverbindung in das System integriert, so dass variabel ausführbare Verbindungsglieder nutzbar werden.

Erfindungsgemäß ist der Vorwahlsteller im Bereich der schubbeweglichen Stützverbindung mit einem das innen liegende Bewegungsglied zumindest bereichsweise umfassenden, einenends mit der Überbrückungseinheit verbundenen und anderenends mit einem eine Handbedienung aufweisenden Hüllprofilteil versehen. Damit wird erreicht, dass das Hüllprofilteil gemeinsam mit einer Handbedienung des Vorwahlstellers eine an der Maschine bzw. dessen Rahmen schwenk- und/oder schubbeweglich gehaltene Einheit bildet. In optionaler Ausführung ist vorgesehen, dass diese Handbedienung mit einem Drehgriff, einem Fingerhebel oder einem Steuerrad versehen sein kann. Die Einheit aus Handbedienung und Hüllprofilteil ist dabei auf dem innen liegenden Bewegungsglied verschieblich gehalten.

Die zweckmäßige Ausführung im Bereich der Steuervorrichtung sieht vor, dass das am Vorwahlsteller vorgesehene Bewegungsglied als eine starre Seele eines Bowdenzuges ausgebildet ist. Damit sind unabhängig von der Ausbildung des umgebenden Hüllprofilteils zumindest Zug- und Druckkräfte auf den Steuerhebel übertragbar. Es versteht sich, dass zur Stabilisierung dieses schubbewegliche Teile kombinierenden Stell- und Spannsystems im Bereich der Steuervorrichtung zumindest das verlagerbare Bewegungsglied mit einer dessen Einbaulage bzw. jeweilige Bedienstellung beeinflussenden Spannfeder o. dgl. Gegenhalter versehen ist.

Die konstruktive Umsetzung des seinerseits mit der Überbrückungseinheit im Bereich der Steuervorrichtung verbundenen Handstellers sieht vor, dass dieser ebenfalls ein Bewegungsglied aufweist, das von einem - in diesem Falle ortsfesten - Hüllprofil umgriffen ist. Das Hüllprofilteil des Handstellers ist dabei am Maschinenrahmen und/oder dem Führungslenker so gehalten, dass das innen liegende Bewegungsglied in Form einer starren Seele eines Bowdenzuges optimal bewegt werden kann. Diese starre bzw. biegeelastische Seele des Bowdenzuges ist im Bereich eines Halters mit der zum Vorwahlsteller gerichteten Überbrückungseinheit verbunden. Auch bei diesem Teilbereich des Stellsystems kann der Handsteller zumindest im Verbindungsbereich zur Überbrückungseinheit mit einer das System aussteifenden Spannfeder versehen sein.

Für eine optimale Gestaltung der beiden Steller-Verbindungen im Bereich der diese kombinierenden Überbrückungseinheit können unterschiedliche konstruktive Varianten gewählt werden. In bevorzugter Ausführung ist im Bereich der Überbrückungseinheit ein sich zwischen den jeweiligen Bewegungsgliedern von Hand- und Vorwahlsteller erstreckendes Leitelement vorgesehen. Die konstruktive Ausführung ist dann vorteilhaft, wenn dieses Leitelement in Form eines Leitstabes ausgebildet ist. Dieses "starre" Element kann dabei vorteilhaft auch aus einem biegeelastischen Material geformt sein, so dass entsprechende Bauteilverlagerungen im Bereich der Steuervorrichtung bzw. der Verbindungskonstruktion sicher aufnehmbar sind und zum Steuerhebel hin weitergeleitet werden.

Eine weitere Ausführung des Leitelementes sieht vor, dass dieses in Form eines Lenkhebels oder einer Schwinge ausgebildet ist. Diese Bauteile eröffnen die Möglichkeit, durch entsprechende Anlenk- und/oder Anlagepunkte definierte Bewegungsräume im Bereich der Überbrückungseinheit in das System zu integrieren, so dass durch entsprechende Einstellungen Anpassungen des gesamten Systems an spezifische Maschinenkonstruktionen, beispielsweise entsprechende Grenzen der Leistungsparameter, möglich sind.

Das vorbeschriebene Stellsystem wird im Bereich der Steuervorrichtung noch dadurch verbessert, dass zumindest im Bereich der Überbrückungseinheit jeweilige dieser vorwählbare Einbaupositionen vorgebende Haltefedern als Gegenglieder vorgesehen sind. Die damit erreichte federnde Halterung im Bereich der Überbrückungseinheit bzw. der mit dieser zusammenwirkenden Bewegungsglieder kann so ausgelegt werden, dass Teile des Systems aus einer zentralen Nulllage zu jeweiligen Endanschlägen hin verlagert werden können und damit die im Bereich des Hand- bzw. Vorwahlstellers vorgenommenen Einstellungen optimierbar sind.

Weitere Einzelheiten und vorteilhafte Ausgestaltungen ergeben sich aus der nachfolgenden Beschreibung und den Zeichnungen, die mehrere Ausführungsbeispiele des erfindungsgemäßen Landschaftspflegegerätes mit Antriebssteuerung zeigen. In der Zeichnung zeigen:
- Fig. 1: eine Perspektivdarstellung eines motorgetriebenen Landschaftspflegegerätes mit einem jeweilige Bedienelemente aufweisenden Führungslenker,
- Fig. 2: eine Perspektivdarstellung ähnlich Fig. 1 mit einer zusätzlichen Bedieneinheit im Bereich des Führungslenkers,
- Fig. 3: eine vergrößerte Ausschnittsdarstellung der Bedieneinheit gemäß Fig. 2 mit einem Vorwahlsteller und einem Handsteller,
- Fig. 4: eine schematische Prinzipdarstellung einer den Handsteller und den Vorwahlsteller aufweisenden Steuervorrichtung im Bereich einer getriebeseitigen Anlenkung,
- Fig. 5: eine Prinzipdarstellung ähnlich Fig. 4 mit einer zwischen Vorwahlsteller und Handsteller befindlichen Überbrückungseinheit,
- Fig. 6 und Fig. 7: jeweilige Bedienstellungen von Vorwahlsteller und Handsteller,
- Fig. 8: die Steuervorrichtung ähnlich Fig. 5 mit einem als Handhebel ausgebildeten Handsteller,
- Fig. 9: die Steuervorrichtung mit einer pendelnden Aufhängung der Überbrückungseinheit,
- Fig. 10: eine Ausführung der Überbrückungseinheit ähnlich Fig. 9 mit einer zusätzlichen Federverbindung im Bereich des Steuerhebels,
- Fig. 11: eine Ausführung der Überbrückungseinheit mit jeweiligen Federbaugruppen,
- Fig. 12 bis Fig. 15: jeweils unterschiedliche Ausführungen der federnd gelagerten Überbrückungseinheit mit einem Lenkhebel, und
- Fig. 16: eine Ausführung ähnlich Fig. 14 mit Federverbindungen im Bereich der Überbrückungseinheit.

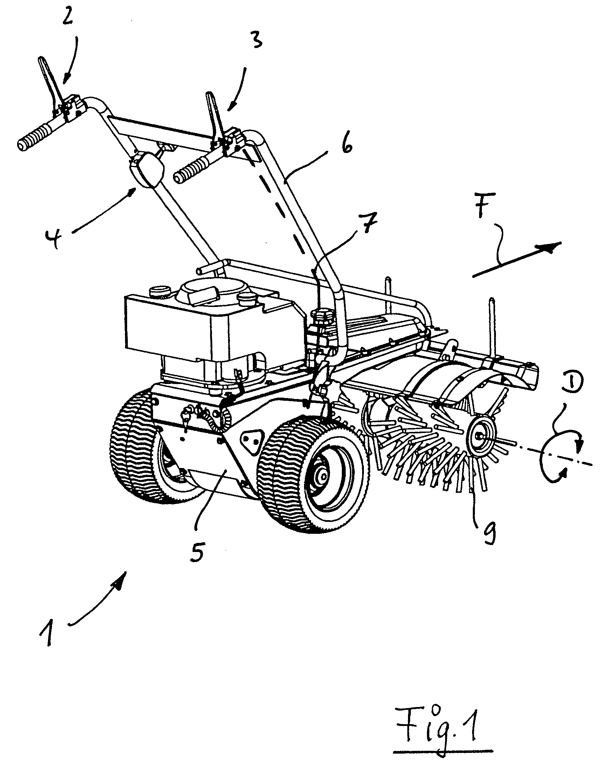

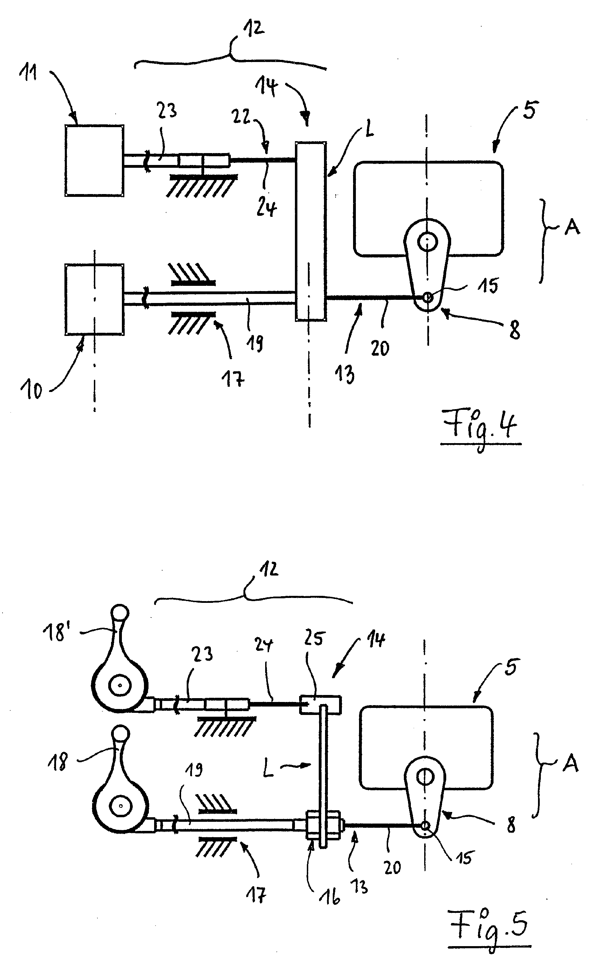

In Fig. 1 ist in einer perspektivischen Rückansicht ein in Form einer motorgetriebenen Kehrmaschine ausgebildetes Landschaftspflegegerät 1 dargestellt. Derartige Geräte sind in unterschiedlichen Ausführungen bekannt und weisen zur manuellen Bedienung jeweilige als Handhebel, Handräder o. dgl. ausgebildete Bedienelemente 2, 3, 4 auf, mit denen eine Antriebssteuerung im Bereich des Motors bzw. eines zugeordneten Getriebes auf jeweilige Arbeits- bzw. Fahrsituationen einstellbar ist oder Arbeitsparameter veränderbar sind. Die Bedienelemente 2, 3, 4 sind dabei ausgehend von einem Führungslenker 6 über Bowdenzüge 7 und/oder Gestängeteile mit zumindest einem im Bereich des Getriebes 5 vorgesehenen Steuerhebel 8 (Fig. 4) verbunden. Dabei wird eine jeweilige Verlagerung dieses Steuerhebels 8 zur Einstellung zumindest einer Fahrtrichtung in Vorwärts- bzw. Rückwärtsfahrt und/oder einer jeweiligen Arbeitsgeschwindigkeit des Arbeitswerkzeuges 9 genutzt.

Ausgehend von diesem motorgetriebenen Landschaftspflegegerät gattungsbildender Art gemäß EP 1 068 787 A1 ist das erfindungsgemäße Antriebs- und Bedienkonzept dadurch verbessert, dass der getriebeseitige Steuerhebel 8 mit einem Vorwahlsteller 10 und einem in Relation zu diesem eine übersteuernde Wirkung aufweisenden Handsteller 11 als funktionale Baugruppe verbunden ist, derart, dass mit vergleichsweise geringem technischem Aufwand eine optimierbare Gerätesteuerung für insbesondere den professionellen Einsatz erreicht wird.

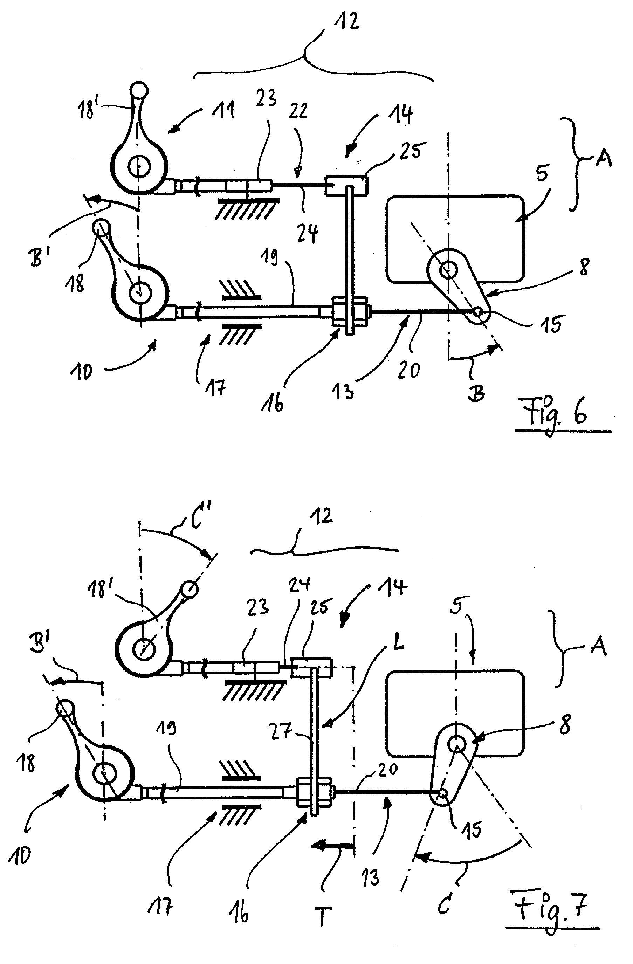

Zum gezielten Einsatz dieser übersteuernden Wirkung sind der Vorwahlsteller 10 und der Handsteller 11 im Bereich einer konstruktiv variabel umsetzbaren Steuervorrichtung 12 (Fig. 4) verbunden. Damit wird erreicht, dass mittels des Handstellers 11 sowohl zwischenzeitliche Änderungen von Antriebsparametern, z. B. F und D (Fig. 1), auf den Steuerhebel 8 übertragbar sind, als auch eine einmal gespeicherte Funktionsstellung des Vorwahlstellers 10 (Fig. 6) unverändert wieder herstellbar ist. Dabei ist eine nochmalige direkte Betätigung des Vorwahlstellers 10 nicht erforderlich und der "Stellaufwand" optimal verkürzt. Damit wird deutlich, dass das erfindungsgemäße Konzept eine Antriebssteuerung A realisiert, bei der der Vorwahlsteller 10 in eine Warteposition verbracht wird, in dieser eine optimale Funktionsstellung der Steuervorrichtung 12 gespeichert wird und diese Stellung - zu einem beliebigen Zeitpunkt - wieder abgerufen werden kann.

Dabei weist das Landschaftspflegegerät 1 im Bereich der Antriebssteuerung A als Steuervorrichtung 12 eine nach Art eines "Geschwindigkeitsreglers" handhabbare Mechanik-Struktur auf, derart, dass die Fahrgeschwindigkeit F des Gerätes 1 vorgewählt werden kann und danach ein Abändern der Fahrgeschwindigkeit möglich ist, ohne diese vorgewählte Fahrgeschwindigkeit nachhaltig zu verändern. Das Landschaftspflegegerät 1 kann - nach plötzlichem Stopp, Drosselung, Beschleunigung o. dgl. Änderungen - in erfindungsgemäßer Ausführung seiner zusätzlichen Funktionseinheit also immer zumindest auf eine vorgewählte Fahrgeschwindigkeit zurückgehen.

Aus der Prinzipdarstellung gemäß Fig. 4 wird deutlich, dass am Steuerhebel 8 nur ein (vom Vorwahlsteller 10 ausgehendes) Bewegungsglied 13 angreift. Dieses wirkt mit dem als erstes Bedienelement vorgesehenen Vorwahlsteller 10 und dem als zweites Bedienelement vorgesehenen Handsteller 11 im Bereich einer Überbrückungseinheit 14 zusammen. An Stelle des nur einen - zur Übertragung von Zugkräften und Druckkräften geeigneten - Bewegungsgliedes 13 ist auch die Anwendung zweier gegeneinander wirksamer Glieder (nicht dargestellt) denkbar.

Die Überbrückungseinheit 14 ist eine optimale konstruktive Variante, um die übersteuernde Wirkung des Handstellers 11 einfach zu realisieren. Aus der Zusammenschau von Fig. 5 bis Fig. 7 wird deutlich, dass mittels des Vorwahlstellers 10 im Bereich der Antriebssteuerung A zumindest eine für die jeweilige Anwendung optimale Funktionsstellung B auswählbar ist. Diese Funktionsstellung B bleibt dann zumindest phasenweise - unabhängig von zwischenzeitlichen Bedienungen des Handstellers 11 - als übersteuerbare Stellung B' (Fig. 7) erhalten.

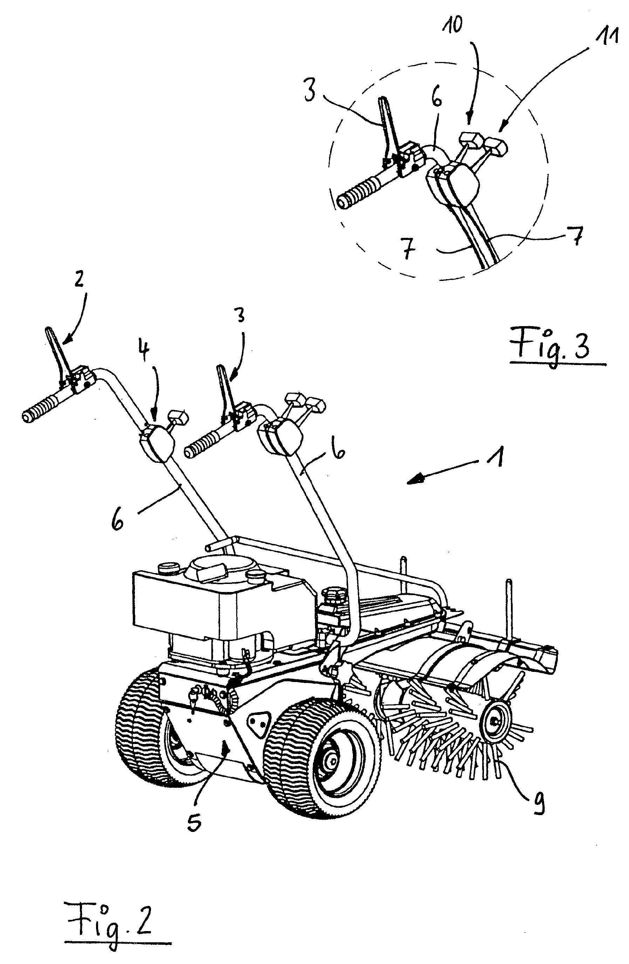

Damit wird deutlich, dass der im Bereich des Führungslenkers 6 befindliche Handsteller 11, der Vorwahlsteller 10 sowie die Überbrückungseinheit 14 im Bereich vor dem Steuerhebel 8 der Antriebssteuerung A die wahlweise nur mittels des einen Handstellers 11 bedienbare Steuervorrichtung 12 definieren. Dabei ist das Konzept so realisierbar, dass die Steuervorrichtung 12 im Bereich des Handstellers 11 nach Art einer Ein-Hand-Bedienung betätigt werden kann. Aus der vergrößerten Einzeldarstellung gemäß Fig. 3 wird deutlich, dass der Vorwahlsteller 10 und der Handsteller 11 bei dieser Ausführung unmittelbar nebeneinander im Bereich des Führungslenkers 6 angeordnet sind.

Bei der praktischen Realisierung dieser zusätzlichen Bedieneinheit am Landschaftspflegegerät 1 ist vorgesehen, dass im Bereich des Vorwahlstellers 10 eine Voreinstellung von Arbeitsparametern (D, F) erfolgt und danach nur noch mit dem am Steuerhebel 8 angreifenden Bewegungsglied 13 bzw. mittels des Handstellers 11 eine wahlweise Veränderung der voreingestellten Arbeitsparameter bzw. der Fahrtrichtung erfolgt.

Aus der Veranschaulichung der Einzelteile im Bereich des Vorwahlstellers 10 wird deutlich, dass dieser im Verbindungsbereich zur Überbrückungseinheit 14 eine in Bezug zum anderenends vorgesehenen Anlenkpunkt 15 verlagerbare Verbindung 16 bildet (Pfeil T, Fig. 7). Damit wird deutlich, dass der Vorwahlsteller 10 eine unabhängig von diesem schubbewegliche Stützverbindung 17 aufweist.

Diese "gleitbewegliche" Bauteilverbindung ist so konzipiert, dass der Vorwahlsteller 10 mit einem das innen liegende Bewegungsglied 13 zumindest bereichsweise umfassenden, einenends mit der Überbrückungseinheit 14 verbundenen und anderenends mit einem die Handbedienung 18 aufweisenden Hüllprofilteil 19 versehen ist. Damit bildet das Hüllprofilteil 19 mit der Handbedienung 18 eine an dem Landschaftspflegegerät 1 schwenk- und/oder schubbeweglich festlegbare Einheit, mit der die vorbeschriebenen Stellbewegungen als die "Voreinstellung" oder "Parameterveränderung" realisierbar sind.

Als Handbedienung 18 sind dabei Bauteile in Form eines Drehgriffes, eines Fingerhebels oder eines Stellrades denkbar (nicht näher dargestellt).

Für die übersteuernde Verbindung der funktionalen Baugruppen im Bereich der beiden Bedienteile 10 und 11 ist wesentlich, dass die Einheit aus Handbedienung 18 und Hüllprofilteil 19 auf dem innen liegenden Bewegungsglied 13 verschieblich gehalten wird. Als vorteilhafte Ausführung ist vorgesehen, dass das Bewegungsglied 13 des Vorwahlstellers 10 als starre Seele eines Bowdenzuges ausgebildet ist und damit zumindest Zug- und Druckkräfte übertragbar sind.

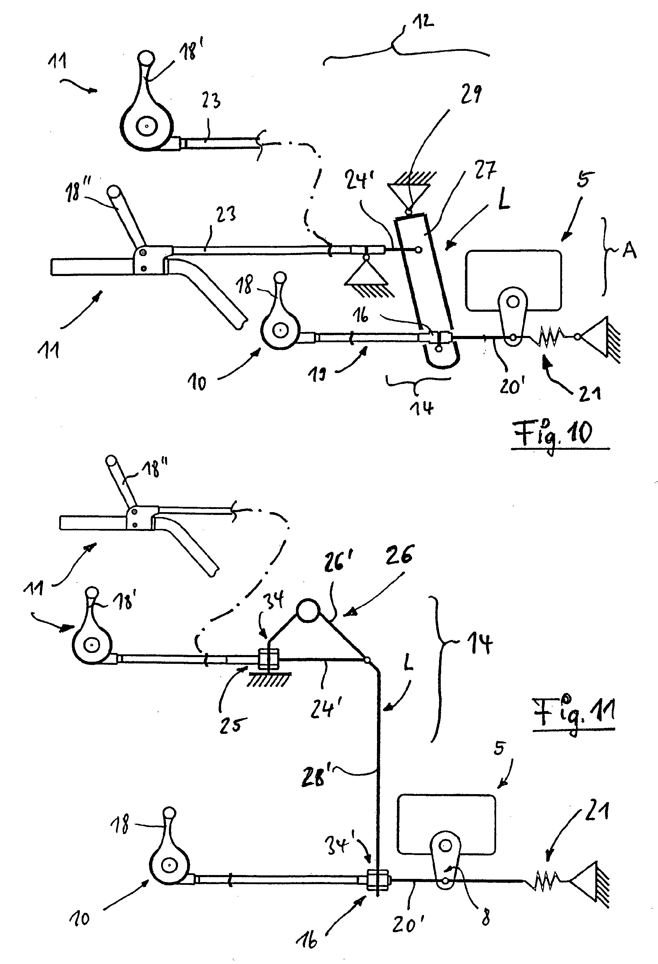

Zur Stabilisierung der vorbeschriebenen Bauteile im Bereich des Vorwahlstellers 10 ist vorgesehen, dass die Steuervorrichtung 12 zumindest im Bereich des Bewegungsgliedes 13 mit einer deren Einbaulage beeinflussenden Spannfeder 21 (Fig. 10) versehen ist.

Das vorbeschriebene Konzept gemäß Fig. 4 bis Fig. 8 zeigt, dass der erfindungsgemäße Handsteller 11 seinerseits ein mit der Überbrückungseinheit 14 verbundenes Bewegungsglied 22 aufweist, das - im Unterschied zum Vorwahlsteller 10 und dessen Bewegungsglied 13 - von einem ortsfesten Hüllprofilteil 23 umgriffen ist. Dabei ist vorgesehen, dass das Hüllprofilteil 23 am Maschinenrahmen und/oder dem Führungslenker 6 festgelegt werden kann.

Das Bewegungsglied 22 dieses Handstellers 11 ist ebenfalls als starre Seele 24 eines Bowdenzuges ausgebildet, wobei diese Seele 24 im Bereich eines Halters 25 mit der Überbrückungseinheit 14 verbunden ist. Ausgehend von der Stabilisierung im Bereich des Handstellers 11 kann dieser im Verbindungsbereich zur Überbrückungseinheit 14 ebenfalls mit einer Spannfeder 26 (Fig. 11) versehen sein.

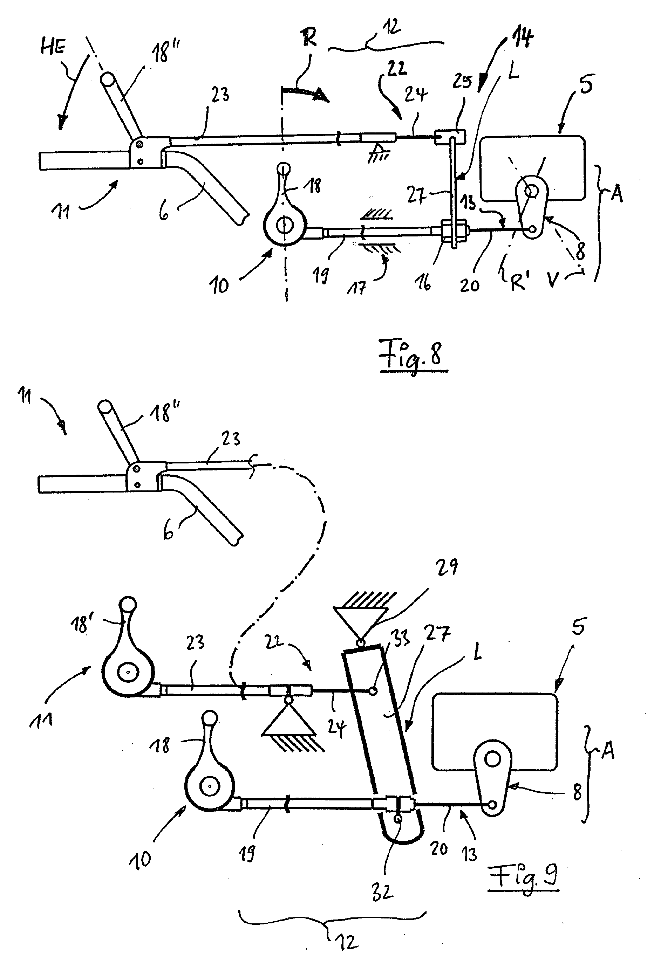

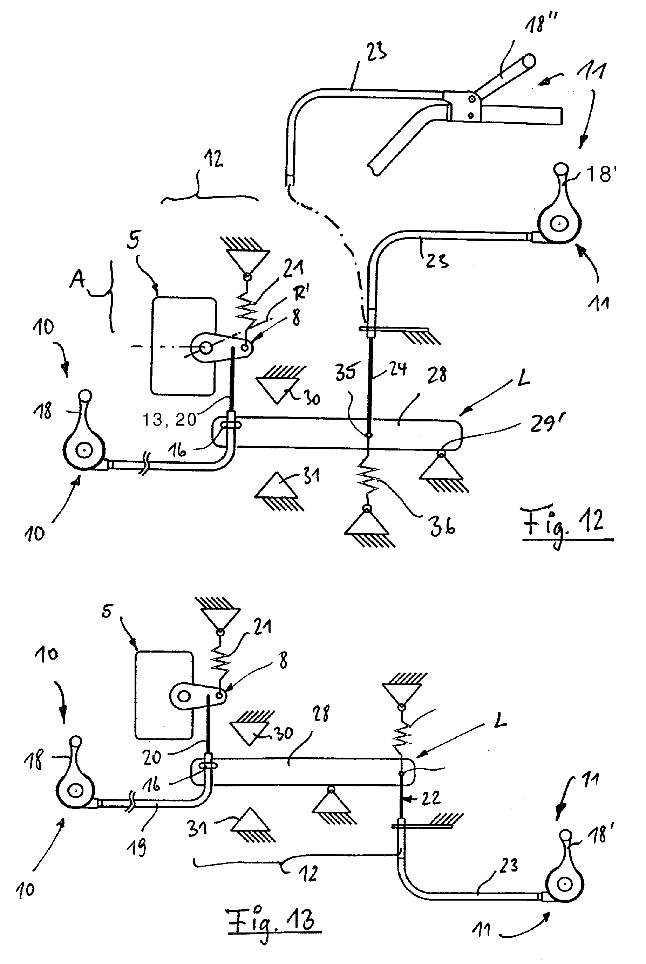

Das vorbeschriebene, weitgehend allgemein gehaltene Konstruktionsprinzip einer übersteuernden Bedienung des Steuerhebels 8 (Fig. 4, Fig. 5) kann in einer Vielfalt von technischen Ausführungsformen an Geräten 1 umgesetzt werden. Als übergeordneter konstruktiver Ansatz ist dabei vorgesehen, dass im Bereich der Überbrückungseinheit 14 ein sich zwischen den Bewegungsgliedern 13 und 22 - von Hand- und Vorwahlsteller 10, 11 - erstreckendes Leitelement L vorgesehen ist. Dieses Leitelement L ist ausgehend von der Prinzipdarstellung gemäß Fig. 4 in den nachfolgenden Darstellungen gemäß Fig. 8 bis Fig. 16 in unterschiedlichen Ausführungsformen beschrieben, wobei darauf aufbauend jeweilige unterschiedliche Verbindungskonzepte realisiert werden. In der Ausführungsform gemäß Fig. 5 bis Fig. 8 ist das Leitelement L in Form eines Leitstabes 27 dargestellt, der in den Ausführungen gemäß Fig. 9 und Fig. 10 eine Gelenkverbindung (bei 29) aufweist. In den Ausführungsformen gemäß Fig. 11 bis Fig. 16 ist das Leitelement L in Form eines "elastischen" Lenkhebels 28' (Fig. 11) bzw. einer Schwinge 28 (Fig. 12 bis Fig. 16) vorgesehen.

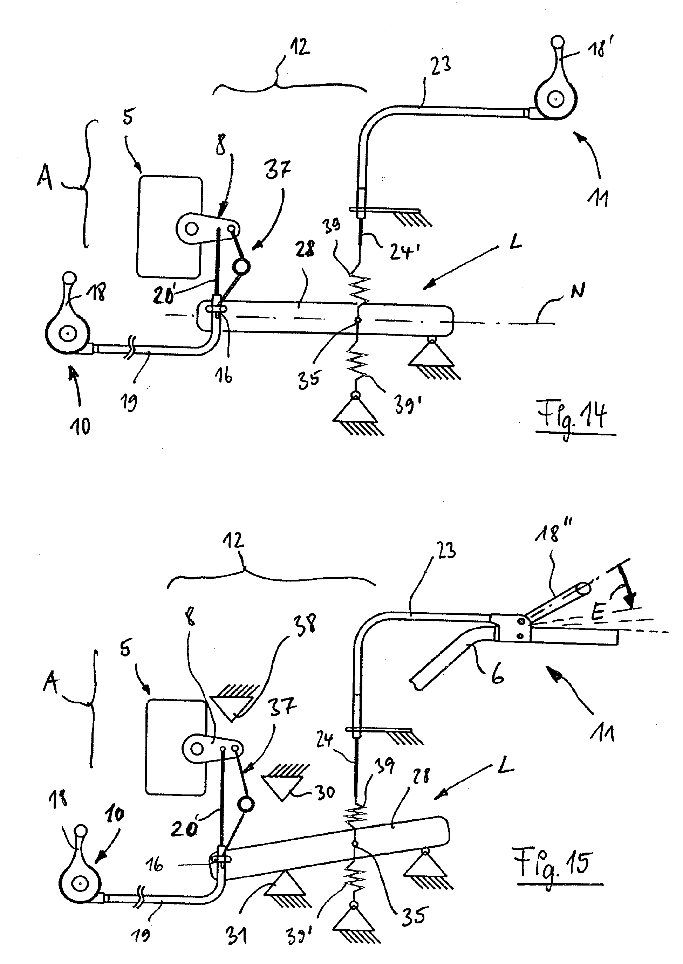

Dabei wird deutlich, dass die in jeder der Ausführungsformen gemäß Fig. 5 bis Fig. 16 dargestellte Steuervorrichtung 12 zumindest im Bereich der Überbrückungseinheit 14 mit einer oder mehreren, dieser vorwählbare Einbaupositionen vorgebenden Haltefedern versehen sein kann. Diese federnd gehaltene Überbrückungseinheit 14 (Fig. 11 bis Fig. 16) kann dabei insbesondere aus einer zentralen Nulllage N (Fig. 14) zu jeweiligen Endanschlägen 30, 31 hin verlagert werden (Fig. 15).

In Fig. 8 ist eine praktisch realisierbare Ausführungsform des erfindungsgemäßen Konzeptes dargestellt, wobei der als Geschwindigkeitshebel wirksame Steuerhebel 8 im Bereich eines stufenlosen Getriebes 5, beispielsweise eines hydraulischen Getriebes, vorgesehen ist und dabei die Einstellung bzw. Vorwahl einer Fahrgeschwindigkeit mittels des als Bewegungsglied 13 vorgesehenen Bowdenzuges 20 im Bereich des Vorwahlstellers 10 erfolgt. Der Vorwahlsteller 10 kann dabei reibschlüssig oder über eine Rastung in jeder Position festgestellt werden. Synchron zu dieser Stellbewegung (Pfeil B', Fig. 6, Fig. 7) kann der Steuerhebel 8 um einen variabel vorgebbaren Stellbereich (Pfeil C, Fig. 7) bewegt werden. Zur Antriebssteuerung im Getriebe 5 wirkt der Steuerhebel 8 beispielsweise mit zwei Anschlägen zusammen. Bei einem hydraulischen Getriebe kann in konstruktiver Ausführung ein Ventil betätigt werden, mit dem der Ölfluss geregelt wird. Der als starre Seele ausgeführte Bowdenzug 20 ist zur Übertragung von Zug- und Druckkräften so ausgelegt, dass beispielsweise bei einer Bewegung des Vorwahlstellers nach rechts (Pfeil R, Fig. 8) der Steuerhebel 8 in die Position R' gelangt und damit das Gerät 1 rückwärts läuft. Analog dazu bedeutet die Stellung gemäß Strichlinie V (Fig. 8, rechte Seite) eine Umkehr der Bewegungsrichtung - nämlich vorwärts -, und in der gezeigten Mittelstellung gemäß Fig. 8 befindet sich das Getriebe 5 im Leerlauf.

Der am Lenker 6 in Form einer Handbedienung 18" vorgesehene zweite Hebel ist als Handsteller 11 vorgesehen, wobei dessen Bewegungsglied 22 in Form der starren Seele 24 eines Bowdenzuges über den Halter 25 und die Überbrückungseinheit 14 so in das System integriert wird, dass damit eine zusätzliche Veränderung der Fahrgeschwindigkeit - als "übersteuernde" Wirkung bezüglich des Vorwahlstellers 10 - möglich ist. Ausgehend davon, dass der Steuerhebel 8 mittels des Vorwahlstellers 10 bereits in Stellung V - nämlich die Stellung zur Vorwärtsfahrt der Maschine - verlagert ist, kann nunmehr der Handsteller 11 bedient werden. Dabei wird der Hebel 18" niedergedrückt (Pfeil HE, Fig. 8, linke Seite), so dass die Seele 24 des Bewegungsgliedes 22 nach links verlagert ist und folglich auch der Halter 25 nach links gezogen wird. Durch diese synchrone Bewegung wird gleichzeitig der Vorwahlsteller 10 so "übersteuert", dass der Steuerhebel 8 in die Rückwärtsgangstellung gemäß Position R' verlagert ist. Damit läuft das Gerät 1 nunmehr rückwärts. Wird der Hebel 18" danach entgegen der Bewegungsrichtung HE wieder aufgerichtet, kehrt das System in die Ausgangslage zurück und die ursprünglich im Bereich des Vorwahlstellers 10 eingestellte ("gespeicherte") Fahrgeschwindigkeit bzw. Fahrtrichtung wird wieder eingenommen.

Dabei ist gewährleistet, dass der maximale Hub des Bewegungsgliedes 22 gleich oder größer ist als der Hub im Bereich des Hüllprofilteils 19 bzw. des Bowdenzuges 20. Damit kann jede Stellung des Steuerhebels 8 so verändert werden, dass der Rückwärtsgang erreicht wird. Im Extremfall ist das System so ausgelegt, dass mittels des Hebels 18" das Gerät 1 von maximaler Vorwärtsfahrt in maximale Rückwärtsfahrt gebracht werden kann.

Zur Anpassung dieses allgemein beschriebenen Systems mit "starren Seelen" im Bereich der Bewegungsglieder 13 und 22 sind weitere konstruktive Ausführungen an speziellen Geräten 1 vorgesehen, wobei ein erstes Konzept in Fig. 9 deutlich wird. Hier wird im Bereich der Überbrückungseinheit 14 der "starre" Leitstab 27 verwendet. Durch dessen gelenkige Lagerung bei 29 kann eine exakte Abstimmung von - im Bereich des Vorwahlstellers 10 (Hubweg C, Fig. 7) und des Handstellers 11 (Hubweg C', Fig. 7) - bauteilbedingten unterschiedlichen Stellwegen erreicht werden. Außerdem wird mit der Ausführungsform gemäß Fig. 9 erreicht, dass ein Durchbiegen der jeweiligen Seelen 20, 24 der Bowdenzüge vermieden ist und die Befestigungspunkte 32, 33 als Drehpunkte eine optimale Aufnahme von Zug- und Druckkräften ermöglichen.

Zur Optimierung der in Fig. 4 bis Fig. 9 gezeigten Systeme mit "starren Bowdenzügen" ist in weiteren Ausführungen der erfindungsgemäßen Funktionseinheit eine konzeptionelle Anpassung vorgesehen, wobei insbesondere die vorteilhaftere Verwendung von flexiblen Bowdenzügen realisiert wird. Da Bowdenzügen mit einer flexiblen Seele 20', 24' nur geringe oder keine Druckkräfte übertragen können, sind diese allgemein als Bewegungsglieder 13, 22 vorgesehenen Teile vorteilhaft über Federelemente (Zugfeder, Druckfeder) in einer "straffen" Lage zu halten. Üblicherweise werden dabei Zugfedern 21 (Fig. 10) eingesetzt, so dass deren Spannkräfte bei Betätigung des Handstellers 11 bzw. des Vorwahlstellers 10 zu überwinden sind und eine Rückstellkraft wirksam wird.

In einer konstruktiv einfachen Ausführung gemäß Fig. 10 wird deutlich, dass dieses hier dargestellte System der Steuervorrichtung 12 mit der einen Zugfeder 21 auskommt. Die Zugfeder 21 ist so zu dimensionieren, dass mögliche Reibungskräfte am Steuerhebel 8 überwunden werden können. Es ist zu vermeiden, dass denkbare Druckkräfte im Bereich der Seele 24' zur Durchbiegung der Seele 20' führen. In der Praxis werden deshalb die Bowdenzüge nicht gerade verlegt sondern aus Platzgründen im Bogen geführt. Dies führt in Bezug auf das Hüllprofilteil 19 dazu, dass im Bereich des Leitstabes 27 zusätzliche Kräfte wirken können. Auch diese Kräfte sind bei der Auslegung der Spannfeder 21 zu beachten.

Eine Optimierung dieses "einfachen" Systems ist deshalb bereits dadurch möglich, dass im Bereich der Überbrückungseinheit 14 eine zusätzliche Spannfeder 26 (Fig. 11) vorgesehen wird, so dass die Seele 24' permanent gespannt wird. Dabei zeigt die Darstellung gemäß Fig. 11 als alternative Lösung auch noch den Einsatz einer speziellen Schenkelfeder 26', die so dimensioniert sein kann, dass der Leitstab L vollständig durch einen verlängerten Schenkel 28' ersetzt werden kann. Die Schenkelfeder 26' hält die Seele 24' auf Spannung. Außerdem besitzt die Schenkelfeder 26' an ihren Enden zwei Montageösen 34, 34', so dass die Verbindung 16 und der Halter 25 erfassbar sind. Parallel zu diesem Federsystem 26', 28' wird der Bowdenzug 20' durch die Spannfeder 21 gehalten. Dieses System mit der durchgehenden Spannfeder 21 hat außerdem den Vorteil, dass der Schenkel 28' in variablen Längen ausgeführt werden kann und damit mit geringem Aufwand eine Anpassung unterschiedlicher Hubwege (C, C', Fig. 7) möglich ist.

In Fig. 12 bis Fig. 16 sind weitere Ausführungen des Systems mit einem jeweiligen Leitelement L in Form eines als Hebel o. dgl. ausgebildeten Leitstabes 28 dargestellt. Diese Lösung ist insbesondere für den Fall vorgesehen, dass der Einsatz einer Schenkelfeder 26 (gemäß Fig. 11) die Fixierung der Bowdenzüge an einem speziellen Gerät 1 nicht ermöglicht.

In der dargestellten Ausführungsform gemäß Fig. 12 befindet sich das Getriebe 5 im Leerlauf und der Steuerhebel 8 in der Neutralstellung. Im Bereich eines Gelenkes 29' ist der Leithebel 28 schwenkbeweglich gelagert. Über die Anbindung des Handstellers 11 am Leithebel 28 (im Punkt 35) wird über ein dabei frei wählbares Hebelverhältnis die jeweilige Beeinflussung im Bereich des anderenends vorgesehenen Steuerhebels 8 definiert. Eine Zugfeder 36 ist dabei so dimensioniert, dass beispielsweise nach einem Lösen des Handhebels 18" der Leithebel 28 gegen einen Anschlag 31 (Fig. 15) verlagert wird. Gleichzeitig ist die Zugfeder 21 in der Lage (Fig. 12), den Steuerhebel 8 in die Position R' (Rückwärtsfahrt) zu verlagern. Gleichzeitig wird dabei das Bewegungsglied 13 des Vorwahlstellers 10 gespannt. Durch die beiden Anschläge 30 und 31 ist insbesondere eine Begrenzung der zu regelnden Geschwindigkeit möglich. Die Konstruktion gemäß Fig. 12 ist vorteilhaft dann ausführbar, wenn die Montage und die Verlegeposition des Hüllprofilteils 23 des Handstellers 11 im Bereich des Gerätes 1 frei gewählt werden soll.

In Fig. 13 ist eine durch eine teilweise Spiegelung der Bauteile veränderte Ausführung ähnlich Fig. 12 dargestellt, wobei aus gerätetechnischen Platzgründen das Bewegungsglied 22 des Handstellers 11 unterhalb des Leithebels 28 befestigt werden kann. Daraus ergibt sich auch eine entsprechende Umkehr der zu Fig. 12 vorbeschriebenen Bewegungsrichtungen.

In Fig. 14 bis Fig. 16 ist eine weitere Variation des Federspannungs-Systems dargestellt, wobei hier eine Schenkelfeder 37 (ähnlich Schenkelfeder 26, Fig. 11) im Bereich der Antriebssteuerung A vorgesehen ist. Diese Schenkelfeder 37 wird dabei derart zwischen dem Steuerhebel 8 und dem Leitschenkel 28 eingesetzt, dass die Kräfte dieser Schenkelfeder 37 nur auf die Seele 20' des Vorwahlstellers 10 wirken. Denkbar wäre an Stelle dieser Zugfeder 37 auch der optionale Einsatz einer Druckfeder im Bereich des Bowdenzuges 24' (nicht dargestellt), wobei durch diese Federstruktur die Seele 20' des Bowdenzuges hindurchzuschieben wäre und dabei als Anschlag das Hüllprofilteil 19 wirksam wird.

Die in Fig. 14 bis Fig. 16 eingesetzte Schenkelfeder 37 weist noch weitere Vorteile auf, da mittels eines geeigneten Aufspannwinkels - beispielsweise 180° bei entspannter Feder - gezielte Druckkräfte aufgenommen werden. Daraus ist abzuleiten, dass eine sehr weiche Feder 37 eingesetzt werden kann und damit die Seele 20' nur gering belastet wird. Damit kann im Bereich des Vorwahlstellers 10 bzw. dessen Bedienteil 18 ein vergleichsweise leichtgängiges Drehrad o. dgl. Baugruppe eingesetzt werden, so dass der Bedienkomfort - beispielsweise durch Fingerbedienung am Führungslenker 6 - weiter verbessert ist.

Zusätzlich ist zur Geschwindigkeitsbegrenzung im Bereich des Steuerhebels 8 ein Anschlag 38 (Fig. 15) vorgesehen, mit dem die Fahrgeschwindigkeit im Rückwärtsgang direkt am Getriebe 5 begrenzt wird. Die Zugfeder 39 dient dazu, dass die Handbedienung 18" auch dann heruntergedrückt werden kann, wenn der Leithebel L gegen den Anschlag 30 verlagert ist. Daraus ist abzuleiten, dass die Federkraft der Feder 39 wesentlich größer auszulegen ist als die Federkraft der entgegenwirkenden Zugfeder 39'.

Eine Bedienposition der vorbeschriebenen Systeme ist in Fig. 15 veranschaulicht, wobei der Vorwahlsteller 10 so eingestellt ist, dass das Getriebe 5 in der dargestellten Neutralstellung positioniert ist. Das Leitelement L in Form des Leithebels 28 befindet sich in Anlagestellung am Anschlag 31. Wird nunmehr die Handbedienung 18" in Richtung des Führungslenkers 6 bewegt (Pfeil E), kann zunächst der Steuerhebel 8 bis gegen den Anschlag 38 bewegt werden. Damit kann beispielsweise ein Steilwert bis hin zu einer maximalen Geschwindigkeitsänderung erreicht werden. Insbesondere ist vorgesehen, dass die Rückwärtsganggeschwindigkeit gezielt durch die Position des Anschlages 38 begrenzt werden kann.

Ist diese Anlageposition des Steuerhebels 8 am Anschlag 38 erreicht (nicht dargestellt), kann der Hebel 18" in Richtung E weiterbewegt werden, so dass nunmehr das Leitelement L mit dem Leithebel 28 weiter nach oben "gezogen" wird. Dabei wird die relativ weich ausgeführte Schenkelfeder 37 komprimiert, und diese Aufwärtsbewegung wird dann durch den Anschlag 30 gestoppt. In dieser Phase wirkt sich die Grundeinstellung der Federn des Systems aus, wobei insbesondere vorgesehen ist, dass die Zugfeder 39' in der durch die Bewegung E erreichten Einstellung optimal expandiert ist.

In dieser Stellphase des Systems gemäß Fig. 15 wird im Bereich der Schenkelfeder 37 die Seele 20' entlastet, so dass hier auch eine Durchbiegung denkbar ist. Ebenfalls ist denkbar, dass die Seele 20' eine Öse durchläuft und damit die Durchbiegung ausgeglichen werden kann (nicht dargestellt).

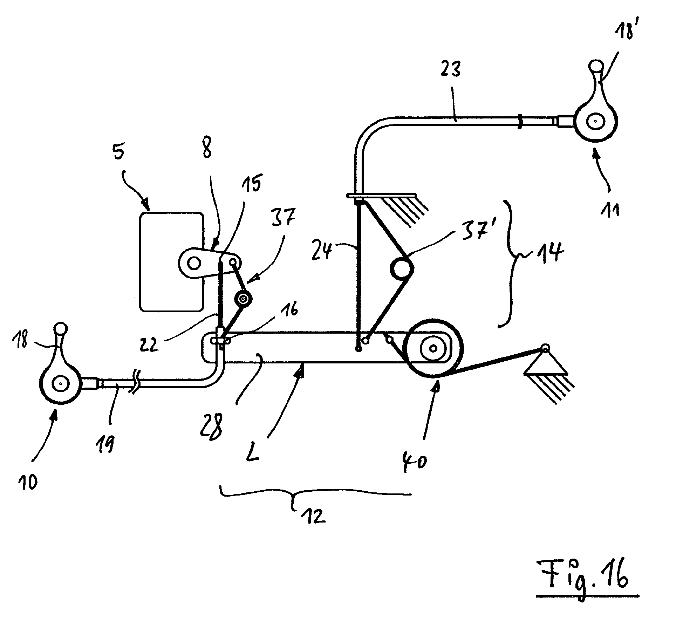

Die Ausführungsform gemäß Fig. 16 kombiniert die in den vorbeschriebenen Darstellungen gezeigten Zug-Druck-Federkonstruktionen. Dabei wird die "Aufhängung" des Leitelementes L im Bereich sämtlicher Anlenkpunkte durch jeweilige Schenkelfedern 37, 37' und eine Spiralfeder 40 beispielhaft veranschaulicht.

In sämtlichen Ausführungsformen der vorbeschriebenen Vorwahlsteller 10 bzw. Handsteller 11 ist denkbar, unterschiedliche Bedienelemente 18, 18', 18" zu verwenden. Diese alternativen Ausführungen sind in den Darstellungen, beispielsweise Fig. 9, Fig. 10, Fig. 11, Fig. 12, durch jeweilige Verbindungen mit Strichpunktlinien angedeutet.

## Patentansprüche

1. Motorgetriebenes Landschaftspflegegerät (1) mit einer eine manuelle Bedienung aufweisenden Antriebssteuerung (A) im Bereich des Motors bzw. eines zugeordneten Getriebes (5), wobei jeweilige als Handhebel oder -räder ausgebildete Bedienelemente (2, 3, 4) ausgehend von einem Führungslenker (6) über Bowdenzüge (7) und/oder Gestängeteile mit zumindest einem im Bereich des Getriebes (5) vorgesehenen Steuerhebel (8) verbunden sind, so dass dessen Verlagerung zur jeweiligen Einstellung zumindest einer Fahrtrichtung (F) in Vorwärts- bzw. Rückwärtsfahrt und/oder einer Arbeitsgeschwindigkeit (D) nutzbar ist, dabei der getriebeseitige Steuerhebel (8) mit einem Vorwahlsteller (10) sowie einem in Relation zu diesem eine übersteuernde Wirkung aufweisenden Handsteller (11) verbunden ist und am Steuerhebel (8) zumindest ein Bewegungsglied (13) angreift, das mit dem als erstes Bedienelement vorgesehenen Vorwahlsteller (10) sowie dem als zweites Bedienelement vorgesehenen Handsteller (11) mittels einer Überbrückungseinheit (14) zusammenwirkt, **dadurch gekenntzeichnet,** dass der Vorwahlsteller (10) mit einem das innen liegende Bewegungsglied (13) zumindest bereichsweise umfassenden, einenends mit der Überbrückungseinheit (14) verbundenen und anderenends mit einem eine Handbedienung(18) aufweisenden Hüllprofilteil (19) versehen ist, derart, dass das Hüllprofilteil (19) mit der Handbedienung (18) eine an dem Gerät (1) schwenk- und schubbeweglich gehaltene Einheit bildet.

2. Landschaftspflegegerät nach Anspruch 1, **dadurch gekennzeichnet, dass** der Vorwahlsteller (10) und der Handsteller (11) im Bereich einer Steuervorrichtung (12) verbunden sind, wobei mittels des Handstellers (11) sowohl zwischenzeitliche Änderungen von Antriebsparametern (F, D) auf den Steuerhebel (8) übertragbar sind, als auch eine gespeicherte Funktionsstellung ohne direkte Betätigung des Vorwahlstellers (10) unverändert wieder herstellbar ist.

3. Landschaftspflegegerät nach Anspruch 2, **dadurch gekennzeichnet, dass** der Vorwahlsteller (10) in eine eine optimale Funktionsstellung der Steuervorrichtung (12) speichernde Warteposition verlagerbar ist.

4. Landschaftspflegegerät nach einem der Ansprüche 1 bis 3, **dadurch gekennzeichnet, dass** mit dem Vorwahlsteller (10) im Bereich der Antriebssteuerung (A) zumindest eine für die jeweilige Anwendung optimale Funktionsstellung (B) auswählbar ist und diese zumindest phasenweise unabhängig von zwischenzeitlichen Bedienungen (C, C') des Handstellers (11) erhalten bleibt.

5. Landschaftspflegegerät nach einem der Ansprüchen 2 bis 4, **dadurch gekennzeichnet, dass** der im Bereich des Führungslenkers (6) befindliche Handsteller (11), der Vorwahlsteller (10) sowie die Überbrückungseinheit (14) die wahlweise nur mittels des einen Handstellers (11) bedienbare Steuervorrichtung (12) im Bereich vor dem Steuerhebel (8) der Antriebssteuerung (A) definieren.

6. Landschaftspflegegerät nach einem der Ansprüche 1 bis 5, **dadurch gekennzeichnet, dass** der Handsteller (11) mittels der Überbrückungseinheit (14) die in Relation zum Vorwahlsteller (10) übersteuernde Wirkung aufweist.

7. Landschaftspflegegerät nach einem der Ansprüchen 2 bis 6, **dadurch gekennzeichnet, dass** die Steuervorrichtung (12) im Bereich des Handstellers (11) nach Art einer Ein-Hand-Bedienung bedienbar ist.

8. Landschaftspflegegerät nach Anspruch 7, **dadurch gekennzeichnet, dass** der Vorwahlsteller (10) und der Handsteller (11) unmittelbar nebeneinander im Bereich des Führungslenkers (6) angeordnet sind.

9. Landschaftspflegegerät nach einem der Ansprüche 1 bis 8, **dadurch gekennzeichnet, dass** im Bereich des Vorwahlstellers (10) eine Voreinstellung von Arbeitsparametern (F, D) erfolgt und danach nur noch mit dem am Steuerhebel (8) angreifenden Bewegungsglied (13) bzw. des Handstellers (11) eine wahlweise Veränderung (C) von voreingestellten Arbeitsparametern bzw. der Fahrtrichtung vorgesehen ist.

10. Landschaftspflegegerät nach einem der Ansprüche 1 bis 9, **dadurch gekennzeichnet, dass** der Vorwahlsteller (10) im Verbindungsbereich zur Überbrückungseinheit (14) eine in Bezug zu einem anderenends vorgesehenen Anlenkpunkt (15) des Steuerhebels (8) verlagerbare Verbindung (16) bildet (Pfeil T).

11. Landschaftspflegegerät nach Anspruch 10, **dadurch gekennzeichnet, dass** der Vorwahlsteller (10) mit einer schubbeweglichen Stützverbindung (17) versehen ist.

12. Landschaftspflegegerät nach einem der Ansprüche 1 bis 11, **dadurch gekennzeichnet, dass** die Handbedienung (18, 18', 18") von einem Drehgriff, einem Fingerhebel oder einem Stellrad gebildet ist.

13. Landschaftspflegegerät nach einem der Ansprüche 1 bis 12, **dadurch gekennzeichnet, dass** die Einheit aus Handbedienung (18) und Hüllprofilteil (19) auf dem innen liegenden Bewegungsglied (13) verschieblich gehalten ist.

14. Landschaftspflegegerät nach einem der Ansprüche 1 bis 13, **dadurch gekennzeichnet, dass** das Bewegungsglied (13) des Vorwahlstellers (10) als starre Seele eines Bowdenzuges (20) ausgebildet ist und damit zumindest Zug- und Druckkräfte übertragbar sind.

15. Landschaftspflegegerät nach einem der Ansprüche 1 bis 13, **dadurch gekennzeichnet, dass** das Bewegungsglied (13) von zwei gegeneinander wirkenden Bowdenzügen gebildet ist.

16. Landschaftspflegegerät nach einem der Ansprüche 2 bis 15, **dadurch gekennzeichnet, dass** die Steuervorrichtung (12) zumindest im Bereich des Bewegungsgliedes (13) eine deren Einbaulage beeinflussende Spannfeder (21) aufweist.

17. Landschaftspflegegerät nach einem der Ansprüche 1 bis 16, **dadurch gekennzeichnet, dass** der Handsteller (11) seinerseits ein mit der Überbrückungseinheit (14) verbundenes Bewegungsglied (22) aufweist, das von einem ortsfesten Hüllprofilteil (23) umgriffen ist.

18. Landschaftspflegegerät nach Anspruch 17, **dadurch gekennzeichnet, dass** das Hüllprofilteil (23) am Maschinenrahmen und/oder dem Führungslenker (6) gehalten ist.

19. Landschaftspflegegerät nach Anspruch 17 oder 18, **dadurch gekennzeichnet, dass** das Bewegungsglied (22) des Handstellers (11) als starre Seele (24) eines Bowdenzuges ausgebildet ist.

20. Landschaftspflegegerät nach einem der Ansprüche 17 bis 19, **dadurch gekennzeichnet, dass** die starre Seele (24) des Bewegungsgliedes (22) im Bereich eines Halters (25) mit der Überbrückungseinheit (14) verbunden ist.

21. Landschaftspflegegerät nach einem der Ansprüche 17 bis 20, **dadurch gekennzeichnet, dass** der Handsteller (11) im Verbindungsbereich zur Überbrückungseinheit (14) mit einer Spannfeder (26) versehen ist.

22. Landschaftspflegegerät nach einem der Ansprüche 1 bis 21, **dadurch gekennzeichnet, dass** im Bereich der Überbrückungseinheit (14) ein sich zwischen den Bewegungsgliedern (13, 22) von Hand- und Vorwahlsteller (10, 11) erstreckendes Leitelement (L) vorgesehen ist.

23. Landschaftspflegegerät nach Anspruch 22, **dadurch gekennzeichnet, dass** das Leitelement (L) in Form eines Leitstabes (27) ausgebildet ist.

24. Landschaftspflegegerät nach Anspruch 22 oder 23, **dadurch gekennzeichnet, dass** der Leitstab (L) aus einem biegeelastischen Material (28') geformt ist.

25. Landschaftspflegegerät nach einem der Ansprüche 22 bis 24, **dadurch gekennzeichnet, dass** das Leitelement (L) in Form eines Lenkhebels (28) oder einer Schwinge ausgebildet ist.

26. Landschaftspflegegerät nach einem der Ansprüche 2 bis 25, **dadurch gekennzeichnet, dass** die Steuervorrichtung (12) zumindest im Bereich der Überbrückungseinheit (14) mit jeweiligen dieser vorwählbare Einbaupositionen vorgebenden Haltefedern (21, 26, 36, 37, 39) versehen ist.

27. Landschaftspflegegerät nach einem der Ansprüche 1 bis 26, **dadurch gekennzeichnet, dass** die federnd gehaltene Überbrückungseinheit (14) aus einer zentralen Nulllage zu jeweiligen Endanschlägen (30, 31) hin verlagerbar ist.

## Claims

1. Motor-driven landscape maintenance device (1) having a drive control unit (A) which comprises a manual operation means and is located in the region of the motor or of an associated gear mechanism (5), respective operating elements (2, 3, 4), which are formed as hand levers or handwheels, being connected, starting from a steering handle (6), to at least one control lever (8), provided in the region of the gear mechanism (5), by means of Bowden cables (7) and/or linkage parts, and therefore the movement of said control lever can be used for respectively adjusting at least one direction of travel (F) in forward or reverse travel and/or a working speed (D), the control lever (8) on the gear mechanism at the same time being connected to a preselector (10) and to a manual adjuster (11) which has an overriding effect over said preselector, and at least one movement member (13) acting on the control lever (8), which member interacts with the preselector (10), which is provided as the first operating element, and with the manual adjuster (11), which is provided as the second operating element, by means of a bridging unit (14), **characterised in that** the preselector (10) is provided with an enveloping profiled part (19) which encloses at least some regions of the inner movement member (13), is connected at one end to the bridging unit (14) and comprises a manual operation means (18) at the other end, such that the enveloping profiled part (19), together with the manual operation means (18), forms a unit which is held on the device (1) so as to be able to move pivotally and translationally.

2. Landscape maintenance device according to claim 1, **characterised in that** the preselector (10) and the manual adjuster (11) are connected in the region of a control apparatus (12), it being possible, by means of the manual adjuster (11), both for intermediate changes in the driving parameters (F, D) to be transferred to the control lever (8) and for a stored operating position to be reproduced, in an unmodified manner, without directly actuating the preselector (10).

3. Landscape maintenance device according to claim 2, **characterised in that** the preselector (10) can be moved into a standby position which stores an optimum operating position of the control apparatus (12).

4. Landscape maintenance device according to any of claims 1 to 3, **characterised in that** at least one optimum operating position (B) for the particular use can be selected using the preselector (10) in the region of the drive control unit (A), and this position is held, at least at times, independently of intermediate operations (C, C') of the manual adjuster (11).

5. Landscape maintenance device according to any of claims 2 to 4, **characterised in that** the manual adjuster (11) located in the region of the steering handle (6), the preselector (10) and the bridging unit (14) define the control apparatus (12), which can be optionally operated only by the manual adjuster (11), in the region before the control lever (8) of the drive control unit (A).

6. Landscape maintenance device according to any of claims 1 to 5, **characterised in that** the manual adjuster (11) has the overriding effect over the preselector (10) by means of the bridging unit (14).

7. Landscape maintenance device according to any of claims 2 to 6, **characterised in that** the control apparatus (12) can be operated in the region of the manual adjuster (11) in the manner of a single-hand operation.

8. Landscape maintenance device according to claim 7, **characterised in that** the preselector (10) and the manual adjuster (11) are arranged immediately next to one another in the region of the steering handle (6).

9. Landscape maintenance device according to any of claims 1 to 8, **characterised in that** working parameters (F, D) are preset in the region of the preselector (10), and an optional change (C) to the preset working parameters or to the direction of travel is then brought about only by means of the movement member (13) acting on the control lever (8) or the movement member of the manual adjuster (11).

10. Landscape maintenance device according to any of claims 1 to 9, **characterised in that** the preselector (10) forms (arrow T), in the region of the connection to the bridging unit (14), a connection (16) which can move relative to a linking point (15) of the control lever (8) provided at the other end.

11. Landscape maintenance device according to claim 10, **characterised in that** the preselector (10) is provided with a support connection (17) which can move translationally.

12. Landscape maintenance device according to any of claims 1 to 11, **characterised in that** the manual operation means (18, 18', 18") is formed by a twist handle, a finger lever or a setting wheel.

13. Landscape maintenance device according to any of claims 1 to 12, **characterised in that** the unit consisting of the manual operation means (18) and the enveloping profiled part (19) is movably held on the inner movement member (13).

14. Landscape maintenance device according to any of claims 1 to 13, **characterised in that** the movement member (13) of the preselector (10) is formed as a rigid core of a Bowden cable (20) and so tensile and compression forces can be transmitted.

15. Landscape maintenance device according to any of claims 1 to 13, **characterised in that** the movement member (13) is formed by two counteracting Bowden cables.

16. Landscape maintenance device according to any of claims 2 to 15, **characterised in that** the control apparatus (12) comprises, at least in the region of the movement member (13), a tension spring (21) which influences the mounting position of said movement member.

17. Landscape maintenance device according to any of claims 1 to 16, **characterised in that** the manual adjuster (11), for its part, comprises a movement member (22) which is connected to the bridging unit (14) and is enclosed by a fixed enveloping profiled part (23).

18. Landscape maintenance device according to claim 17, **characterised in that** the enveloping profiled part (23) is held on the machine frame and/or the steering handle (6).

19. Landscape maintenance device according to either claim 17 or claim 18, **characterised in that** the movement member (22) of the manual adjuster (11) is formed as a rigid core (24) of a Bowden cable.

20. Landscape maintenance device according to any of claims 17 to 19, **characterised in that** the rigid core (24) of the movement member (22) is connected to the bridging unit (14) in the region of a retainer (25).

21. Landscape maintenance device according to any of claims 17 to 20, **characterised in that** the manual adjuster (11) is provided with a tension spring (26) in the region of the connection to the bridging unit (14).

22. Landscape maintenance device according to any of claims 1 to 21, **characterised in that** a guide element (L) extending between the movement members (13, 22) of the manual adjuster (10) and preselector (11) is provided in the region of the bridging unit (14).

23. Landscape maintenance device according to claim 22, **characterised in that** the guide element (L) is in the form of a guide rod (27).

24. Landscape maintenance device according to either claim 22 or claim 23, **characterised in that** the guide rod (L) is formed from a flexurally elastic material (28').

25. Landscape maintenance device according to any of claims 22 to 24, **characterised in that** the guide element (L) is in the form of a steering lever (28) or a rocker.

26. Landscape maintenance device according to any of claims 2 to 25, **characterised in that** the control apparatus (12) is provided with retaining springs (21, 26, 36, 37, 39), at least in the region of the bridging unit (14), which each specify these predeterminable mounting positions.

27. Landscape maintenance device according to any of claims 1 to 26, **characterised in that** the bridging unit (14) which is held in a spring-loaded manner can move from a central zero position towards respective end stops (30, 31).

## Revendications

1. Machine d'entretien paysager motorisée (1) qui comprend une commande d'entraînement (A), pourvue d'une manette de commande, au niveau du moteur ou d'une transmission associée (5), des éléments de commande (2, 3, 4) configurés chacun guidon ou en volant étant reliés, à partir d'un bras de guidage (6), à au moins un levier de commande (8), prévu au niveau de la transmission (5), par le biais de câbles Bowden (7) et/ou de tringles, de sorte que le déplacement du levier de commande peut être utilisé pour régler au moins un sens de marche (F) vers l'avant ou vers l'arrière et/ou une vitesse de travail (D), le levier de commande côté transmission (8) étant relié à un actionneur de présélection (10) et à un actionneur manuel (11) ayant une action de surrégulation par rapport à cet organe de présélection et le levier de commande (8) étant en engagement avec au moins un élément de déplacement (13) qui coopère avec l'actionneur de présélection (10), prévu comme premier élément de commande, et l'actionneur manuel (11), prévu comme second élément d'actionnement, au moyen d'une unité de pontage (14), **caractérisée en ce que** l'actionneur de présélection (10) est pourvu d'un élément profilé extérieur (19) qui entoure au moins par endroits l'élément de déplacement intérieur (13), qui est relié à une extrémité à l'unité de pontage (14) et qui comporte à l'autre extrémité une manette de commande (18) de sorte que l'élément profilé extérieur (19) forme avec la manette de commande (18) une unité maintenue sur l'appareil (1) de façon pivotante et coulissante.

2. Machine d'entretien paysager selon la revendication 1, **caractérisée en ce que** l'actionneur de présélection (10) et l'actionneur manuel (11) sont reliés au niveau d'un dispositif de commande (12), l'actionneur manuel (11) permettant aussi bien de transmettre des variations temporaires de paramètres d'entraînement (F, D) au levier de commande (8) que de rétablir sans modification une position de fonctionnement en mémoire sans actionner directement l'actionneur de présélection (10).

3. Machine d'entretien paysager selon la revendication 2, **caractérisée en ce que** l'actionneur de présélection (10) peut être déplacé dans une position d'attente mémorisant la position de fonctionnement optimal du dispositif de commande (12).

4. Machine d'entretien paysager selon l'une des revendications 1 à 3, **caractérisée en ce que** l'actionneur de présélection (10) permet de sélectionner au niveau de la commande d'entraînement (A) au moins une position de fonctionnement (B) optimale pour l'application particulière et **en ce que** cette position est maintenue au moins par phases indépendamment des actions intermédiaires (C, C') de l'actionneur manuel (11).

5. Machine d'entretien paysager selon l'une des revendications 2 à 4, **caractérisée en ce que** l'actionneur manuel (11) qui se trouve au niveau du bras de guidage (6), l'actionneur de présélection (10) et l'unité de pontage (14) définissent le dispositif de commande (12), qui ne peut être actionné sélectivement qu'au moyen de l'actionneur manuel (11), dans la zone située devant le levier de commande (8) de la commande d'entraînement (A).

6. Machine d'entretien paysager selon l'une des revendications 1 à 5, **caractérisée en ce que** l'actionneur manuel (11) a l'action de surrégulation en relation avec l'actionneur de présélection (10) au moyen de l'unité de pontage (14).

7. Machine d'entretien paysager selon l'une des revendications 2 à 6, **caractérisée en ce que** le dispositif de commande (12) peut être actionné au niveau de l'actionneur manuel (11) d'une seule main.

8. Machine d'entretien paysager selon la revendication 7, **caractérisée en ce que** l'actionneur de présélection (10) et l'actionneur manuel (11) sont disposés directement l'un à côté de l'autre au niveau du bras de guidage (6).

9. Machine d'entretien paysager selon l'une des revendications 1 à 8, **caractérisée en ce qu'**un préréglage de paramètres de travail (F, D) est effectué au niveau de l'actionneur de présélection (10) puis un changement (C) au choix des paramètres de travail ou du sens de déplacement préréglés est prévu seulement par l'élément de déplacement (13), en engagement avec le levier de commande (8), ou l'actionneur manuel (11).

10. Machine d'entretien paysager selon l'une des revendications 1 à 9, **caractérisée en ce que** l'actionneur de présélection (10) forme, au niveau de la liaison avec l'unité de pontage (14), une liaison (16) mobile par rapport à un point d'articulation (15) du levier de commande (8) prévu à l'autre extrémité (flèche T).

11. Machine d'entretien paysager selon la revendication 10, **caractérisée en ce que** l'actionneur de présélection (10) est pourvu d'une liaison de support (17) coulissante.

12. Machine d'entretien paysager selon l'une des revendications 1 à 11, **caractérisée en ce que** la manette de commande (18, 18', 18") est formé par une poignée rotative, un levier en forme de doigt ou une molette.

13. Machine d'entretien paysager selon l'une des revendications 1 à 12, **caractérisée en ce que** l'unité constituée de la manette de commande (18) et de l'élément profilé extérieur (19) est maintenue mobile sur l'élément de déplacement intérieur (13).

14. Machine d'entretien paysager selon l'une des revendications 1 à 13, **caractérisée en ce que** l'élément de déplacement (13) de l'actionneur de présélection (10) est réalisé sous la forme d'un noyau rigide d'un câble Bowden (20) et permet ainsi de transmettre au moins des forces de traction et de pression.

15. Machine d'entretien paysager selon l'une des revendications 1 à 13, **caractérisée en ce que** l'élément de déplacement (13) est formé par deux câbles Bowden antagonistes.

16. Machine d'entretien paysager selon l'une des revendications 2 à 15, **caractérisée en ce que** le dispositif de commande (12) comporte au moins au niveau de l'élément de déplacement (13) un ressort tendeur (21) influant sur la position de montage dudit dispositif de commande.

17. Machine d'entretien paysager selon l'une des revendications 1 à 16, **caractérisée en ce que** l'actionneur manuel (11) comporte de son côté un élément de déplacement (22) qui est relié à l'unité de pontage (14) et qui est entouré par un élément profilé extérieur (23) immobile.

18. Machine d'entretien paysager selon la revendication 17, **caractérisée en ce que** l'élément profilé extérieur (23) est maintenu sur le châssis de la machine et/ou sur le bras de guidage (6).

19. Machine d'entretien paysager selon la revendication 17 ou 18, **caractérisée en ce que** l'élément de déplacement (22) de l'actionneur manuel (11) est configuré sous la forme d'un noyau rigide (24) d'un câble Bowden.

20. Machine d'entretien paysager selon l'une des revendications 17 à 19, **caractérisée en ce que** le noyau rigide (24) de l'élément de déplacement (22) est relié à l'unité de pontage (14) au niveau d'un support (25).

21. Machine d'entretien paysager selon l'une des revendications 17 à 20, **caractérisée en ce que** l'actionneur manuel (11) est pourvu d'un ressort tendeur (26) au niveau de la liaison avec l'unité de pontage (14).

22. Machine d'entretien paysager selon l'une des revendications 1 à 21, **caractérisée en ce qu'**un élément de guidage (L), qui s'étend entre les éléments de déplacement (13, 22) de l'actionneur manuel et de l'actionneur de présélection (10, 11), est prévu au niveau de l'unité de pontage (14).

23. Machine d'entretien paysager selon la revendication 22, **caractérisée en ce que** l'élément de guidage (L) est configuré sous la forme d'une barre de guidage (27).

24. Machine d'entretien paysager selon la revendication 22 ou 23, **caractérisée en ce que** la barre de guidage (L) est formée à partir d'un matériau élastique en flexion (28').

25. Machine d'entretien paysager selon l'une quelconque des revendications 22 à 24, **caractérisée en ce que** l'élément de guidage (L) est configuré sous la forme d'un levier de direction (28) ou d'une bielle oscillante.

26. Machine d'entretien paysager selon l'une des revendications 2 à 25, **caractérisée en ce que** le dispositif de commande (12) est pourvu au moins au niveau de l'unité de pontage (14) de ressorts de retenue (21, 26, 36, 37, 39) qui prédéterminent ces positions de montage pré-sélectionnables.

27. Machine d'entretien paysager selon l'une des revendications 1 à 26, **caractérisée en ce que** l'unité de pontage (14) maintenue élastiquement peut être déplacée d'une position centrale vers des butées d'extrémité respectives (30, 31).
